# EUROPÄISCHE PATENTSCHRIFT

(11) **EP 3 146 882 B1**
(45) Veröffentlichungstag und Bekanntmachung des Hinweises auf die Patenterteilung: **06.06.2018**
(21) Anmeldenummer: 16188673.4
(22) Anmeldetag: 14.09.2016
(51) Int. Cl.: A47L 15/42, A47L 15/48

(54) **GESCHIRRSPÜLMASCHINE, INSBESONDERE HAUSHALTSGESCHIRRSPÜLMASCHINE**
DISHWASHER, IN PARTICULAR DOMESTIC DISHWASHER
LAVE-VAISSELLE, NOTAMMENT LAVE-VAISSELLE MÉNAGER

(30) Priorität: 25.09.2015 DE 102015116251
(43) Veröffentlichungstag der Anmeldung: 29.03.2017
(60) Teilanmeldung: 18167894.7
(73) Patentinhaber: Miele & Cie. KG, 33332 Gütersloh (DE)
(72) Erfinder: Sgurski, Eugen, 33649 Bielefeld (DE); Dees, Florian, 33649 Bielefeld (DE); Laghusemann, Jens, 32107 Bad Salzuflen (DE); Hanitz, Christoph, 33335 Gütersloh (DE)

(56) Entgegenhaltungen:
- EP-A1- 2 526 849
- EP-A1- 2 543 305
- EP-A2- 2 583 614
- DE-A1- 3 900 617
- JP-A- H11 113 831

## Beschreibung

Die Erfindung betrifft eine Geschirrspülmaschine, insbesondere in der Ausgestaltung als Haushaltsgeschirrspülmaschine, mit einem einen Spülraum bereitstellenden Spülbehälter, der der Aufnahme von zu reinigendem Spülgut dient, mit einem dem Spülbehälter nebengeordneten Wasservorratstank sowie mit einer zumindest abschnittsweise durch den Wasservorratstank hindurchgeführten Wellenrohrleitung, die an den Spülbehälter strömungstechnisch angeschlossen ist.

Geschirrspülmaschinen im Allgemeinen sowie Haushaltsgeschirrspülmaschinen im Speziellen sind aus dem Stand der Technik an sich gut bekannt, weshalb es eines gesonderten druckschriftlichen Nachweises an dieser Stelle nicht bedarf.

Gattungsgemäße Geschirrspülmaschinen verfügen typischerweise über einen Spülbehälter, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dergleichen handeln kann.

Zur Beaufschlagung von zu reinigendem Spülgut mit Spülflüssigkeit, der sogenannten Spülflotte, verfügt die Geschirrspülmaschine im Innenraum des Spülbehälters über eine Sprüheinrichtung. Diese Sprüheinrichtung stellt in aller Regel drehbar gelagerte Sprüharme zur Verfügung, wobei typischerweise zwei oder drei solcher Sprüharme vorgesehen sind. Im bestimmungsgemäßen Verwendungsfall erfolgt eine Beaufschlagung des zur reinigenden Spülguts mit Spülflotte mittels sich drehender Sprüharme.

Die von der Sprüheinrichtung abgegebene Spülflotte sammelt sich in einem Sammeltopf des Spülbehälters an. Dieser ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt.

Aus dem Stand der Technik ist es bekannt, Geschirrspülmaschinen mit einem Frischwasserbehälter auszurüsten, der dem Spülbehälter beispielsweise nebengeordnet ist. Eine solche Ausgestaltung ist beispielsweise aus der EP 2 543 305 A1 bekannt.

Die Konstruktion nach der EP 2 543 305 A1 sieht eine Abflussrohrleitung zur Abführung von Abwasser vor, die durch den Frischwasserbehälter hindurchgeführt ist. Nach Abschluss eines Spülprogramms wird die nicht mehr benötigte Spülflotte als Abwasser abgepumpt und dabei durch die im Frischwasserbehälter angeordnete Abflussrohrleitung geführt. Es kann zu einem Wärmeübertrag vom noch vergleichsweise warmen Abwasser auf das noch vergleichsweise kalte Frischwasser kommen. Dabei ist die Abflussrohrleitung zur Erzielung einer möglichst großen Wärmeübertragungsfläche als Wellenrohrleitung ausgebildet.

Gemäß einer typischen Einbausituation ist eine Geschirrspülmaschine am Aufstellort in eine Küchenzeile integriert. In aller Regel ist in diesem Fall oberhalb der Geschirrspülmaschine eine Arbeitsplatte angeordnet. Nach Abschluss eines bestimmungsgemäß durchgeführten Spülprogramms kann es bei einer Türöffnung zu einer unerwünschten Kondensatbildung an der Unterseite der Arbeitsplatte kommen. Dies deshalb, weil etwaige sich im Spülbehälter noch befindliche Brüden bei geöffneter Tür austreten und unterseitig der vergleichsweise kalten Arbeitsplatte unter Kondensatbildung abkühlen. Dies kann in unerwünschter Weise zu Schäden an der Arbeitsplatte führen.

Der Nachteil der Kondensatbildung ergibt sich insbesondere bei Geschirrspülmaschinen, die zwecks Unterstützung der Spülguttrocknung zwecks Brüdenabführung über eine automatische Türöffnung verfügen. So bewirkt die automatische Türöffnung gerade zur Abfuhr von Brüden eine spaltweise Türöffnung, was zu einer direkten Beaufschlagung der Arbeitsplattenunterseite mit Wasserdampf führt.

Um den vorbeschriebenen Nachteil zu überwinden, ist es aus dem Stand der Technik bekannt, vor einer insbesondere automatischen Türöffnung die Arbeitsplatte vorzuwärmen. Zu diesem Zweck ist ein geschirrspülmaschinenseitiges Gebläse vorgesehen, das im Verwendungsfall Frischluft ansaugt und außenseitig an einer Wand des Spülraums vorbeiführt. Infolge dieser Vorbeiführung erwärmt sich die Frischluft an der infolge des vorangegangenen Spülprogramms warmen Spülraumwand auf, und dieser warme Luftstrom wird dann zwecks Vorwärmung der Arbeitsplatte zu selbiger geleitet.

Dabei gehen mit der Vorbeiführung von Frischluft an einer Spülraumwand zwei Vorteile einher. Zum einen wird in der schon vorbeschriebenen Weise ein warmer Luftstrom erzeugt, der zwecks Vermeidung von Kondensatbildung der Arbeitsplattenvorwärmung dient. Darüber hinaus erfolgt aber nicht nur eine Aufwärmung der Frischluft, sondern auch eine Abkühlung der Spülraumwand, was die Kondensationstrocknung im Spülrauminneren unterstützt, da sich infolge der Spülraumwandabkühlung verstärkt im Innenraum des Spülbehälters befindliche Brüden innenseitig der Spülraumwand abkühlen und damit auskondensieren können.

Es ist die **Aufgabe** der Erfindung, bei einer mit einem Wasservorratstank, insbesondere Frischwasserbehälter ausgerüsteten Geschirrspülmaschine auf konstruktiv möglichst einfache Weise eine optimierte Arbeitsplattenvorwärmung und/oder Kondensationstrocknung zu erzielen.

Zur **Lösung** dieser Aufgabe wird mit der Erfindung eine Geschirrspülmaschine mit den Merkmalen von Anspruch 1 vorgeschlagen.

Gemäß der erfindungsgemäßen Ausgestaltung wird der dem Spülbehälter nebengeordnete Wasservorratstank, insbesondere Frischwasserbehälter in synergetischer Weise dazu genutzt, einen Luftkanal ausführen zu können, der sich in Höhenrichtung des Spülbehälters zwischen Wasservorratstank, insbesondere Frischwasserbehälter einerseits und Spülbehälter andererseits befindet. Im Verwendungsfall dient dieser Luftkanal dazu, gezielt Frischluft zwecks Erwärmung an der zugehörigen Außenoberfläche des Spülbehälters vorbeizuführen.

Bei aus dem Stand der Technik vorbekannten Systemen wird die vorzuwärmende Frischluft ungeführt an der zugehörigen Spülbehälterwand vorbeigeführt. Über etliche im Geschirrspülmaschinengehäuse ausgebildete Öffnungen insbesondere in der Seitenwand kann diese an der Spülbehälterwand vorbeigeführte Luft nach außen unkontrolliert entweichen. Im Ergebnis ist der eigentlich gewünschte Vorwärmeffekt ineffizient.

Mit der erfindungsgemäßen Ausgestaltung wird diesbezüglich Abhilfe geschaffen. So erbringt der konstruktiv zwischen Wasservorratstank, insbesondere Frischwasserbehälter und Spülbehälter ausgebildete Luftkanal im Verwendungsfall eine zielgerichtete Luftströmung. Zudem stellt der Luftkanal eine frei von Öffnungen ausgebildete Begrenzung dar, so dass an der Spülbehälterwand vorbeigeführte Luft nicht ungewollte nach außen abströmen kann. Im Ergebnis ergibt sich dank der erfindungsgemäßen Ausgestaltung eine sehr viel effizientere Vorwärmung der am Spülbehälter vorbeigeführten Frischluft mit dem Ergebnis, dass sowohl eine verbesserte Kondensattrocknung als auch eine verbesserte Arbeitsplattenvorwärmung erreicht ist.

Der Wasservorratstank dient zur Bevorratung von Wasser für einen Reinigungsabschnitt eines Spülprogramms. Er kann insbesondere als Frischwasserbehälter, und somit zur Bevorratung von Frischwasser, ausgebildet sein. Hierzu weist er insbesondere Wassereinlassmittel auf zur Überführung von Leitungswasser vom einem hausseitigen Wasseranschluss in den Frischwasserbehälter. Der Frischwasserbehälter kann dabei insbesondere zumindest einen wesentlichen Teil einer für einen Reinigungsabschnitt eines Spülprogramms erforderliche Frischwassermenge bevorraten. Alternativ kann der Wasservorratstank aber auch zur Bevorratung von Spülflotte ausgebildet sein. Hierfür weist die Geschirrspülmaschine insbesondere an sich bekannte Wasserführungsmittel auf, so dass am Ende eines Reinigungsabschnitts, insbesondere einem Programmabschnitt KLARSPÜLEN, die in diesem Abschnitt verwendete Spülflüssigkeit oder zumindest ein Teilvolumen dieser Spülflüssigkeit aus dem Spülraum in den Wasservorratstank transferiert werden kann. Die bevorratete Spülflüssigkeit kann dann in einem späteren Reinigungsabschnitt, insbesondere einem Programmabschnitt VORSPÜLEN des nachfolgenden Spülprogramms, wiederverwendet werden. Es ist auch möglich, dass der Wasservorratstank sowohl zur Bevorratung von Frischwasser als auch zur Bevorratung von Spülflotte ausgebildet ist.

Gemäß einem weiteren Merkmal der Erfindung ist vorgesehen, dass der Luftkanal in Tiefenrichtung des Spülbehälters eine sich über einen Teilbereich des Spülbehälters erstreckende Ausdehnung aufweist. In Abkehr zum Stand der Technik wird also nicht über die gesamte Fläche der Spülbehälterwand in Tiefenrichtung Frischluft geleitet, sondern nur über einen Teilbereich. So kann der Luftkanal beispielsweise eine Erstreckung in Tiefenrichtung aufweisen, die 40% bis 80%, mehr bevorzugt von 50% bis 70% der Abmessung der Spülbehälterwand in Tiefenrichtung entspricht. So hat sich nämlich gezeigt, dass Frischluft, die in Tiefenrichtung über türentfernte Bereiche der Spülbehälterwand geführt wird, nur einen geringen Teil zur wünschenswerterweise zu erzielenden Arbeitsplattenvorwärmung beiträgt. Dies insbesondere deshalb, weil die vorgewärmte Frischluft auf ihrem Weg von der hinteren Spülbehälterkante bis zur Türöffnungskante Wärme verliert, womit der Vorwärmeffekt hinsichtlich der Arbeitsplatte geschmälert wird. Hinzukommt, dass der Spülbehälter gattungsgemäßer Geschirrspülmaschinen oberseitig typischerweise mit Dämmmaterial abgedeckt ist. Insoweit ist die Zuführung von vorgewärmter Frischluft zur vorderen Randkante des Spülbehälters erschwert.

Mit der erfindungsgemäßen Luftkanalausgestaltung ist es möglich, selbigen in Tiefenrichtung in seiner Abmessung zu begrenzen und damit auch hinsichtlich seines Durchströmungsquerschnitts in Abhängigkeit der Förderleistung des die Frischluft in den Luftkanal einfördernden Gebläses zu optimieren.

Es ist gemäß einem weiteren Merkmal der Erfindung vorgesehen, dass der Luftkanal wasservorratstankseitig, insbesondere frischwasserbehälterseitig durch eine vom Wasservorratstank, insbesondere Frischwasserbehälter bereitgestellte Tiefennut begrenzt ist. Der Wasservorratstank verfügt mithin über eine in Höhenrichtung verlaufende Nut, die außenseitig der dem Spülbehälter zugewandten Wandung des Wasservorratstanks ausgebildet ist. Auf konstruktiv sehr einfache Weise ist so der erfindungsgemäße Luftkanal definiert und wasservorratstankseitig begrenzt. Zudem sorgt die Tiefennutausgestaltung dafür, dass der Luftkanal in Tiefenrichtung, das heißt quer zur Höhenrichtung gegenüber dem Spülbehälter abgedichtet ist. Das unerwünschte Entweichen von durch den Luftkanal hindurchgeführter Luft ist so auf konstruktiv einfache Weise effektiv unterbunden.

Spülraumbehälterseitig ist der Luftkanal durch die Außenoberfläche der Spülbehälterwand begrenzt. Im Verwendungsfall wird die Frischluft mithin zwischen der Außenoberfläche des Spülbehälters einerseits und der Außenoberfläche des Wasservorratstanks geführt, wobei die Außenoberfläche des Frischwasserbehälters durch den Grund der vom Wasservorratstank bereitgestellten Tiefennut bestimmt ist.

Gemäß einem weiteren Merkmal der Erfindung ist vorgesehen, dass der Luftkanal lufteingangsseitig in einen trichterförmig ausgebildeten Zuführungsstutzen einmündet. Dieser Zuführungsstutzen dient dem strömungstechnischen Anschluss des Luftkanals an einen Gebläseausgangskanal. Es wird so ein luftdichter Anschluss zwischen Gebläse und Luftkanal erzielt, womit unkontrollierte Luftentweichungen im Übergang zwischen Gebläseausgangskanal und Luftkanal unterbunden sind.

Gemäß einem weiteren Merkmal der Erfindung ist vorgesehen, dass der Wasservorratstank in Entsprechung der Ausgestaltung des Spülbehälters in Höhenrichtung und/oder Tiefenrichtung des Spülbehälters bombierend ausgebildet ist. Es wird somit sichergestellt, dass der Wasservorratstank in seiner geomenischen Ausgestaltung derart ausgebildet ist, dass er sich außerhalb der vom Wasservorratstank bereitgestellten Tiefennut möglichst spaltfrei an den Spülbehälter anlegt. Das wünschenswerterweise zu erzielende dichte Anliegen des Wasservorratstanks am Spülbehälter wird so unterstützt.

Gemäß einem weiteren Merkmal der Erfindung ist vorgesehen, dass der Kontaktbereich zwischen Spülbehälter und Wasservorratstanks zumindest abschnittsweise mit einem Dichtmittel ausgerüstet ist. Durch diese Maßnahme wird das außerhalb der Tiefennut luftdichte Anliegen des Wasservorratstanks am Spülbehälter weiter unterstützt, womit unkontrollierte Querströmungen und Luftentweichungen aus dem erfindungsgemäß vorgesehenen Luftkanal vermieden sind.

Mit der Erfindung wird insgesamt bei gleichzeitig einfacherer Konstruktion eine verbesserte Arbeitsplattenvorwärmung einerseits sowie eine verbesserte Kondensationstrocknung andererseits erreicht. Dies deshalb, weil durch den erfindungsgemäß vorgesehenen Luftkanal eine zielgerichtete Frischluftströmung erreicht ist, wobei in Abkehr zum Stand der Technik konstruktiv zudem sichergestellt ist, dass ungewollte Luftentweichungen und/oder ungewollte Querströmungen infolge der erfindungsgemäß erreichten Kanalisierung vermieden sind.

Weitere Vorteile und Merkmale der Erfindung ergeben sich aus der Beschreibung anhand der nachfolgenden Figuren. Dabei zeigen:
- Fig. 1: in schematischer Darstellung eine Geschirrspülmaschine nach der Erfindung;
- Fig. 2: in schematischer Perspektivdarstellung einen Spülbehälter einer erfindungsgemäßen Geschirrspülmaschine;
- Fig. 3: in schematisch perspektivischer Darstellung den Spülbehälter nach Fig. 2 mit daran angeordnetem Frischwasserbehälter;
- Fig. 4: in schematisch perspektivischer Detailansicht den Übergangsbereich zwischen Gebläseausgangskanal und erfindungsgemäß vorgesehenem Luftkanal;
- Fig. 5: in einer Prinzipdarstellung von oben den Spülbehälter der erfindungsgemäßen Geschirrspülmaschine mit nebengeordnetem Frischwasserbehälter;
- Fig. 6: in schematischer Draufsicht von oben den Spülbehälter der erfindungsgemäßen Geschirrspülmaschine mit nebengeordnetem Frischwasserbehälter;
- Fig. 7: ausschnittsweise den Spülbehälter nach Fig. 6 nebst nebengeordnetem Frischwasserbehälter und
- Fig. 8: in schematischer Perspektivdarstellung den Frischwasserbehälter der erfindungsgemäßen Geschirrspülmaschine.

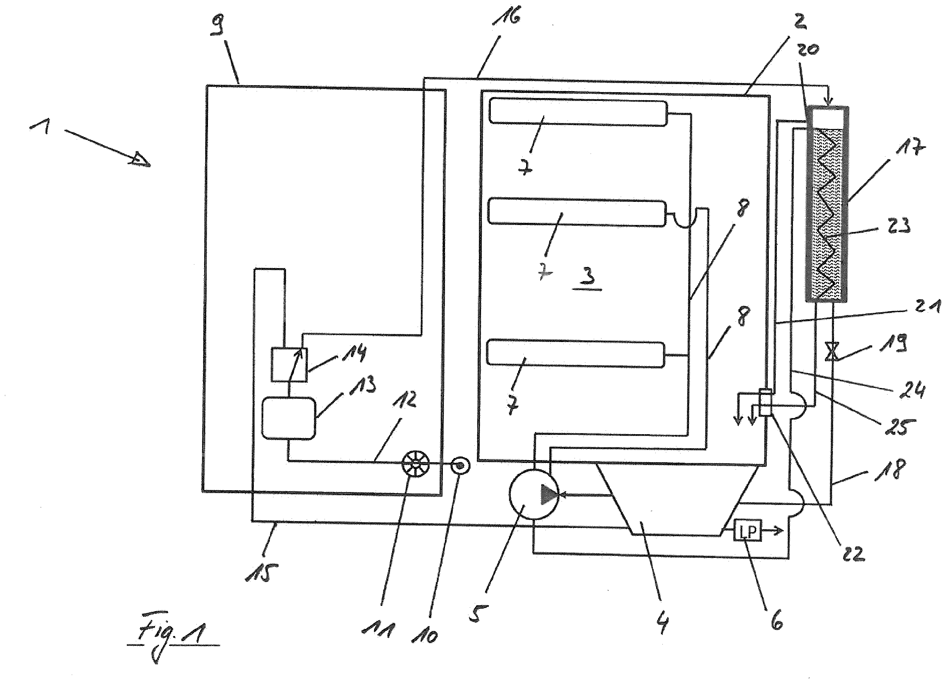

Fig. 1 lässt in rein schematischer Darstellung eine erfindungsgemäße Geschirrspülmaschine 1 erkennen. Diese verfügt in an sich bekannter Weise über einen Spülbehälter 2, der einen Spülraum 3 bereitstellt. Innerhalb des Spülraums 3 sind Sprüharme 7 angeordnet, die über Leitungen 8 strömungstechnisch an eine Umwälzpumpe 5 angeschlossen sind.

Der Spülraum 3 mündet in einen Sammeltopf 4 ein, der strömungstechnisch sowohl an die Umwälzpumpe 5 als auch an eine Abwasserpumpe 6 angeschlossen ist.

Die Geschirrspülmaschine 1 verfügt desweiteren über eine aus dem Stand der Technik an sich bekannte Wassereinlauftasche 9. Diese ist an einen Wasseranschluss 10 angeschlossen. Die Wassereinlauftasche 9 stellt eine Leitung 12 bereit, die ausgehend vom Wasseranschluss 10 unter Zwischenschaltung eines Flügelrads 11 und eines Harzbehälters 13 an ein Ventil 14 angeschlossen ist. Dieses Ventil 14 verschaltet die Leitung 12 wahlweise entweder mit der in den Sammeltopf 4 einmündenden Leitung 15 oder mit der zu einem Frischwasserbehälter 17 führenden Leitungen 16.

Der Frischwasserbehälter 17 ist dem Spülbehälter 2 nebengeordnet. Er ist eingangsseitig an die zum Wassereinlauf 10 führende Leitung 16 angeschlossen. Ausgangsseitig ist der Frischwasserbehälter 17 mittels der Leitung 18 an den Sammeltopf 4 angeschlossen. Die Leitung 18 kann mittels eines Magnetventils 19 wahlweise geöffnet oder geschlossen werden.

Der Frischwasserbehälter 17 verfügt über einen Überlauf 20. Dieser ist an eine Leitung 21 angeschlossen, die durch eine Öffnung 22 im Spülbehälter 2 in den Spülraum 3 geführt ist.

Innerhalb des Frischwasserbehälters 17 ist eine Rohrleitung 23 verlegt. Diese ist eingangsseitig an die Leitung 24 angeschlossen, die ihrerseits zur Umwälzpumpe 5 führt. Ausgangsseitig ist die Rohrleitung 23 an eine Leitung 25 angeschlossen, die durch die Öffnung 22 im Spülbehälter 2 in den Spülraum 3 geführt ist.

Die Leitungen 23, 24 und 25 bilden zusammen mit dem Spülraum 3 und dem Spültopf 4 einen geschlossenen Strömungskreislauf, in dem Spülflotte mittels der Umwälzpumpe 5 zirkulierend geführt werden kann. Dabei gibt die Spülflotte Energie in Form von Wärme beim Durchströmen der Rohrleitung 23 auf das im Frischwasserbehälter 17 befindliche Frischwasser ab. Insoweit stellt der mit der Rohrleitung 23 ausgerüstete Frischwasserbehälter 17 einen Wärmetauscher dar. Um eine möglichst große Wärmeübertragungsfläche bereitzustellen, ist die Rohrleitung 23 als Wellenrohrleitung ausgebildet.

Die vorbeschriebene Konstruktion erlaubt die folgende Verfahrensdurchführung.

Mit Abschluss eines Spülprogramms wird der Frischwasserbehälter 17 mit Frischwasser gefüllt. Dieses kann sich bis auf Raumtemperatur erwärmen und steht für ein nachfolgendes Spülprogramm bereit.

Mit Beginn des nachfolgenden Spülprogramms wird das Ventil 19, welches vorzugsweise als Magnetventil ausgebildet ist, geöffnet und das auf Raumtemperatur vorgewärmte Frischwasser strömt der Schwerkraft folgend in den Sammelbehälter 4 der Geschirrspülmaschine ein. Sofern erforderlich, kann weiteres Frischwasser über den Wasseranschluss 10 mittels der Leitungen 12 und 15 dem Sammeltopf 4 zugeführt werden. Sobald die insgesamt benötigte Menge an Frischwasser im Sammeltopf 4 zur Verfügung steht, startet das eigentliche Spülprogramm mit dem ersten Programmschritt.

Sofern bei der Durchführung eines Spülprogrammschritts erwärmte Spülflotte zum Einsatz kommt, erfolgt nach Abschluss dieses Spülprogrammschritts eine Wärmerückgewinnung durch Wärmeübertragung von der Spülflotte auf in dem Frischwasserbehälter 17 gespeichertes Frischwasser. Zu diesem Zweck wird nach Abschluss des Spülprogrammschritts der Frischwasserbehälter 17 bei geschlossenem Ventil bzw. Magnetventil 19 mit Frischwasser befüllt. Eine in Fig. 1 nicht näher dargestellte Wasserweiche der Umwälzpumpe 5 wird entsprechend geschaltet und alsdann wird die im Spülbehälter 2 befindliche warme Spülflotte mittels der Umwälzpumpe 5 durch die Rohrleitungen 24, 23 und 25 geführt. Die Rohrleitung 23 ist innerhalb des Frischwasserbehälters 17 verlegt, so dass es bei einem Durchströmen mit Spülflotte zu einer Wärmeübertragung auf das im Frischwasserbehälter 17 befindliche Frischwasser kommt. Nach einem Durchströmen der Rohrleitungen gelangt die Spülflotte zurück in den Spülbehälter 2, wo sie sich im Sammeltopf 4 wieder ansammelt und mittels der Umwälzpumpe 5 wiederholt durch die Rohrleitungen 24, 23 und 25 geführt wird. Dieser Umwälzbetrieb wird für eine vorgebbare Zeitdauer oder bis zum Absinken der Temperatur der Spülflotte auf eine vorgebbare Temperatur aufrecht erhalten.

Sobald die Spülflottenzirkulation zwecks Wärmeübertragung abgeschlossen ist, wird die im Sammeltopf 4 befindliche Spülflotte als Abwasser verworfen, zu welchem Zweck die Abwasserpumpe 6 eingeschaltet wird.

Nach erfolgtem Abpumpen der nicht mehr benötigten Spülflotte kann der nächste Spülprogrammschritt beginnen, zu welchem Zweck das Ventil bzw. Magnetventil 19 geöffnet wird. Das im Frischwasserbehälter 17 befindliche vorgewärmte Frischwasser strömt über die Leitung 18 in den Sammeltopf 4 ein. Im Bedarfsfall kann weiteres Frischwasser über die Leitung 15 aus dem Wasseranschluss 10 zugeführt werden.

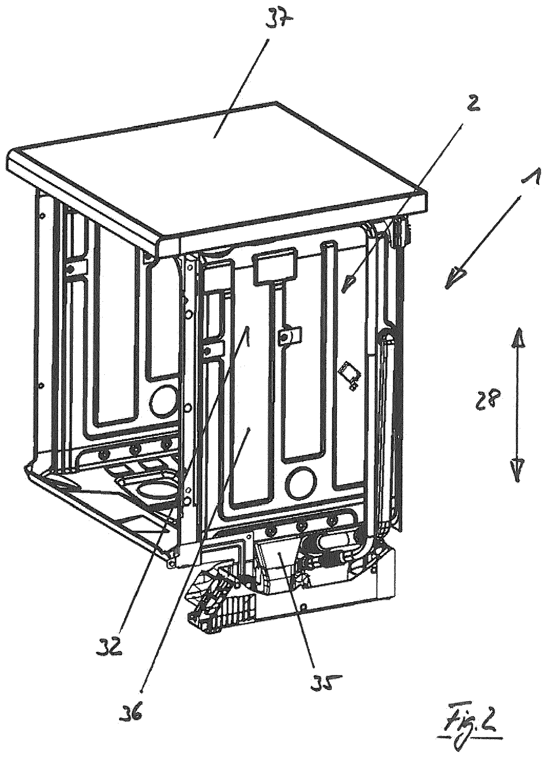

Der vorbeschriebene Frischwasserbehälter 17 ist erfindungsgemäß unter Zwischenordnung eines sich in Höhenrichtung 28 des Spülbehälters 2 erstreckenden Luftkanals 27 am Spülbehälter 2 angeordnet, wie sich dies aus den weiteren Figuren 2 bis 8 ergibt.

Fig. 2 lässt der besseren Darstellung wegen den Spülbehälter 2 der Geschirrspülmaschine 1 zunächst ohne am Spülbehälter 2 angeordneten Frischwasserbehälter 17 erkennen.

Im gezeigten Ausführungsbeispiel ist unterhalb des Spülbehälters 2 ein nicht näher dargestelltes Luftgebläse angeordnet, das ausgangsseitig an einen Luftausgangskanal 35 angeschlossen ist. Im bestimmungsgemäßen Verwendungsfall wird über das Gebläse Frischluft angesaugt und zum Luftausgangskanal 35 gefördert. Die aus dem Luftausgangskanal 35 ausströmende Frischluft wird alsdann außenseitig an der zugehörigen Wandung 36 des Spülbehälters 2 vorbeigeführt und unter Verwendung entsprechender Leitvorrichtungen in den Spalt zwischen Spülbehälteroberseite und darüber befindliche Arbeitsplatte 37 geleitet. Infolge des Vorbeiführens der Frischluft an der Wandung 36 kommt es in an sich aus dem Stand der Technik bekannter Weise zu einer Kondensationstrocknung in dem vom Spülbehälter 2 bereitgestellten Spülraum 3.

Infolge des Vorbeiführens der Frischluft an der Wandung 36 kommt es zu einem Erwärmen derselben, wobei die erwärmte Frischluft in aus dem Stand der Technik an sich bekannter Weise dazu dient, die Arbeitsplatte 37 vorzuwärmen, um im Falle einer geöffneten Spülraumtür eine ungewollte Kondensation an der Unterseite der Arbeitsplatte 37 zu verhindern. Aus diesem Grunde wird die erwärmte Frischluft in den Spaltraum zwischen Spülbehälteroberseite und Arbeitsplatte 37 geführt.

Um eine definierte Frischluftführung mit dem Ziel einer optimierten Arbeitsplattenvorwärmung einerseits und optimierter Kondensationstrocknung andererseits zu erzielen, ist gemäß der erfindungsgemäßen Ausgestaltung ein Luftkanal 27 vorgesehen, der zwischen Spülbehälter 2 und Frischwasserbehälter 17 ausgebildet ist.

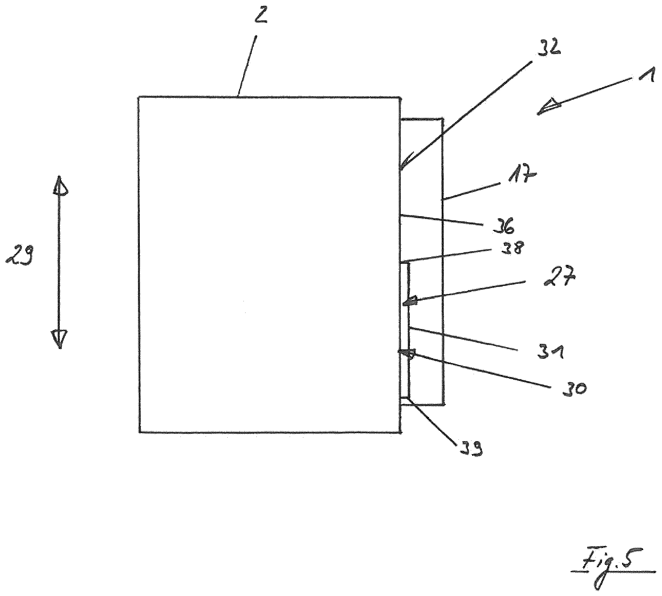

Wie insbesondere die Prinzipdarstellung nach Fig. 5 erkennen lässt, ist der Luftkanal 27 frischwasserbehälterseitig durch eine vom Frischwasserbehälter 17 bereitgestellte Tiefennut 31 begrenzt. Spülbehälterseitig ist der Luftkanal 27 indes durch die zugehörige Außenoberfläche 32 der Spülbehälterwandung 36 begrenzt. Im Zusammenspiel von Spülbehälter 2 und Frischwasserbehälter 17 ergibt sich so ein zwischen Spülbehälter 2 und Frischwasserbehälter 17 ausgebildeter Luftkanal 27. Dabei ist der Luftkanal 27 in Tiefenrichtung 29 durch die seitlichen Wandungen 38 und 39 der Tiefennut 31 begrenzt.

Wie die Darstellung nach Fig. 5 ferner erkennen lässt, weist der Luftkanal 27 in Tiefenrichtung 29 des Spülbehälters 2 eine sich nur über einen Teilbereich 30 des Spülbehälters 2 erstreckende Ausdehnung auf. Der Luftkanal 27 erstreckt sich mithin nicht über die gesamte Außenoberfläche 32 der Spülbehälterwandung 36, sondern deckt nur den Teilbereich 30 derselben ab. Durch diese Ausgestaltung ist sichergestellt, dass vorgewärmte Frischluft auf möglichst kurzem Weg zur Arbeitsplatte 37 geführt wird, so dass unerwünschte Wärmeverluste aufgrund vergleichsweise langer Luftführungswege vermieden sind.

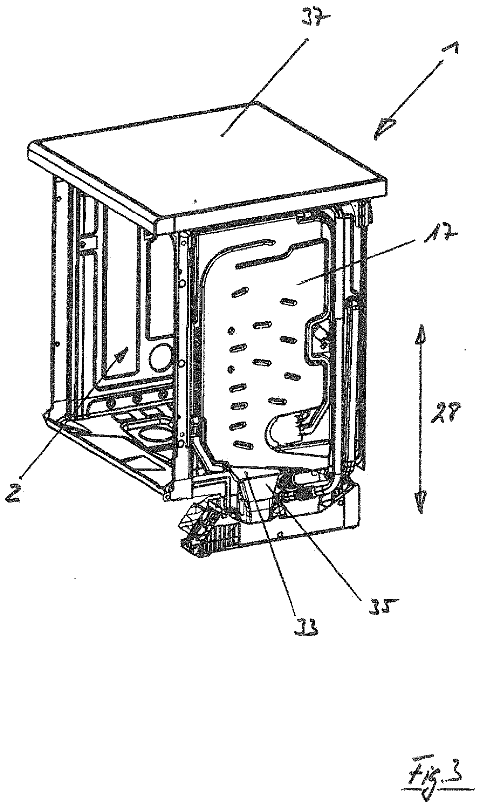

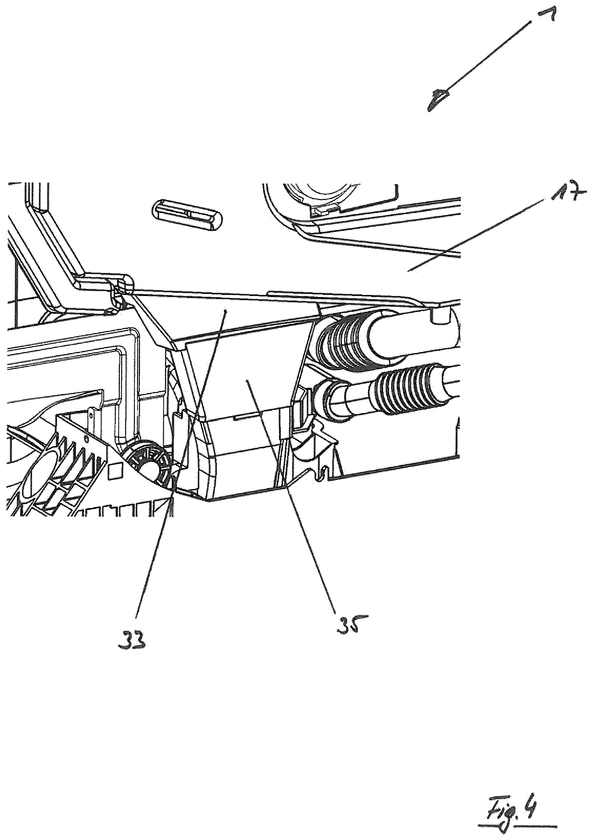

Die Fign. 3 und 4 lassen die Anordnung des Frischwasserbehälters 17 am Spülbehälter 2 in schematisch perspektivischer Darstellung erkennen, wobei Fig. 4 eine Detailansicht zeigt.

Zwecks Versorgung mit Frischluft ist der Luftkanal 27 eingangsseitig an den Luftausgangskanal 35 des Frischluftgebläses angeschlossen, wie sich aus Fig. 3 ergibt. Für einen strömungstechnisch im Wesentlichen dichten Anschluss mündet der Luftkanal 27 lufteingangsseitig in einen trichterförmig ausgebildeten Zuführungsstutzen 33 ein, wie dies insbesondere die Detailansicht nach Fig. 4 ergibt. Die trichterförmige Ausgestaltung des Zuführungsstutzens 33 ist auch aus Montagegründen von Vorteil, da ein im Wesentlichen strömungstechnischer Anschluss durch einfaches Ineinanderstecken von Zuführungsstutzen 33 und Luftausgangskanal 35 gestattet ist.

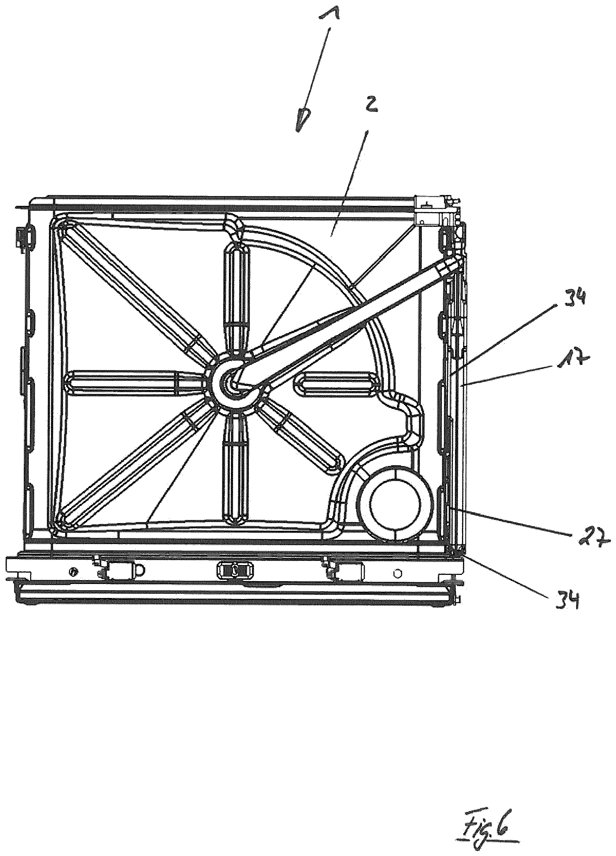

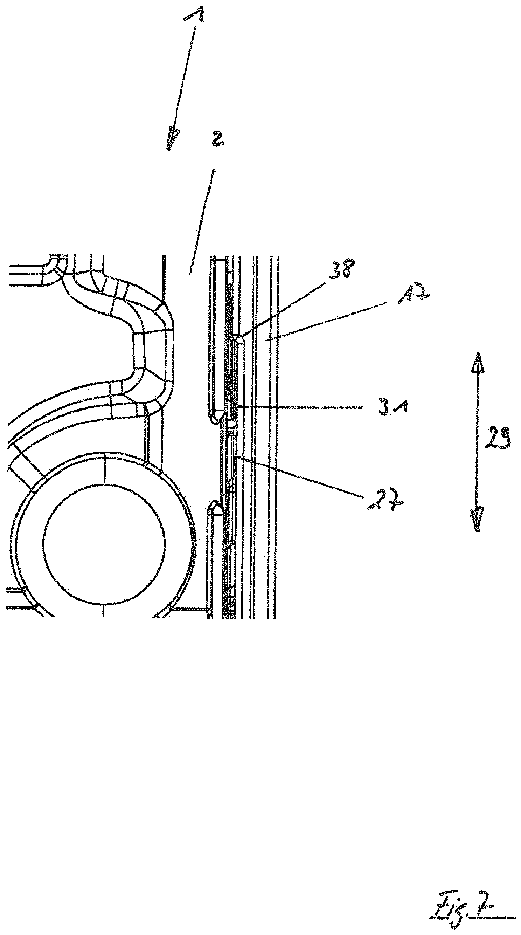

Die Fign. 6 und 7 lassen nochmal in schematischer Draufsicht von oben den Luftkanal 27 und insbesondere die den Luftkanal 27 frischwasserbehälterseitig begrenzende Tiefennut 31 erkennen.

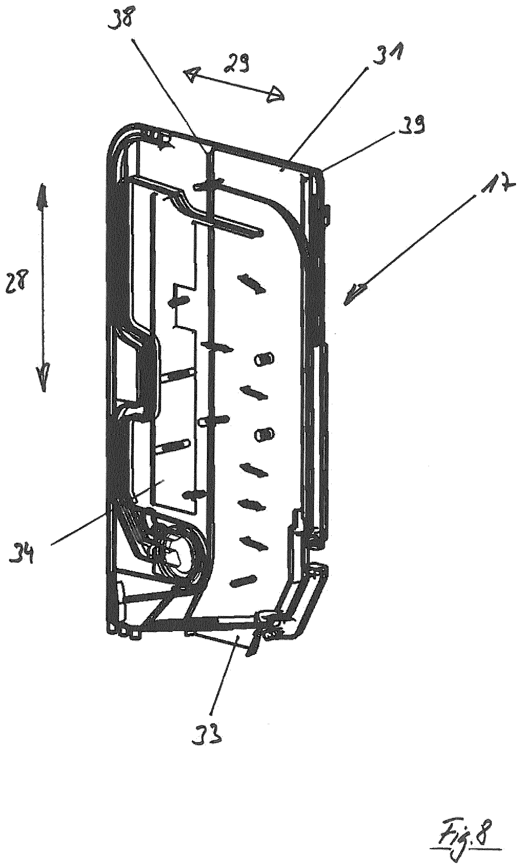

Fig. 8 zeigt in einer schematischen Seitenansicht den Frischwasserbehälter 17, und zwar hinsichtlich seiner dem Spülbehälter 2 zugewandten Seite. Es sind der Luftkanal 27, die Tiefennut 31 sowie die die Tiefennut 31 in Tiefenrichtung 29 begrenzenden seitlichen Wandungen 38 und 39 gut zu erkennen.

Für eine zusätzliche seitliche Abdichtung des Luftkanals 27 in Tiefenrichtung 31 kann vorgesehen sein, dass der Kontaktbereich 34 zwischen Spülbehälter 2 und Frischwasserbehälter 17 mit einem Dichtmittel ausgerüstet ist.

### Bezugszeichen

- 1: Geschirrspülmaschine
- 2: Spülbehälter
- 3: Spülraum
- 4: Sammeltopf
- 5: Umwälzpumpe
- 6: Abwasserpumpe
- 7: Sprüharm
- 8: Leitung
- 9: Wassereinlauftasche
- 10: Wasseranschluss
- 11: Flügelrad
- 12: Leitung
- 13: Harzbehälter
- 14: Ventil
- 15: Leitung
- 16: Leitung
- 17: Wasservorratstank, insbesondere Frischwasserbehälter
- 18: Leitung
- 19: Ventil, insbesondere Magnetventil
- 20: Überlauf
- 21: Leitung
- 22: Öffnung
- 23: Rohrleitung
- 24: Leitung
- 25: Leitung
- 26: Stutzen
- 27: Luftkanal
- 28: Höhenrichtung
- 29: Tiefenrichtung
- 30: Teilbereich
- 31: Tiefennut
- 32: Außenoberfläche
- 33: Zuführungsstutzen
- 34: Kontaktbereich
- 35: Luftausgangskanal
- 36: Wandung
- 37: Arbeitsplatte
- 38: seitliche Wandung
- 39: seitliche Wandung

## Patentansprüche

1. Geschirrspülmaschine, insbesondere Haushaltsgeschirrspülmaschine, mit einem einen Spülraum (3) bereitstellenden Spülbehälter (2), der der Aufnahme von zu reinigendem Spülgut dient, mit einem dem Spülbehälter (2) nebengeordneten Wasservorratstank (17) sowie mit einer zumindest abschnittsweise durch den Wasservorratstank (17) hindurchgeführten Wellenrohrleitung, die an den Spülbehälter (2) strömungstechnisch angeschlossen ist,
**dadurch gekennzeichnet,**
**dass** der Wasservorratstank (17) unter Zwischenordnung eines sich in Höhenrichtung (30) des Spülbehälters (2) erstreckenden Luftkanals (27), der eingangsseitig an einen Luftausgangskanal (35) eines Frischluftgebläses angeschlossen ist, am Spülbehälter (2) angeordnet ist,
wobei der Luftkanal (27) wasservorratstankseitig durch eine vom Wasservorratstank (17) bereitgestellte Tiefennut (31) begrenzt ist.

2. Geschirrspülmaschine nach Anspruch 1, **dadurch gekennzeichnet, dass** der Luftkanal (27) in Tiefenrichtung (29) des Spülbehälters (2) eine sich über einen Teilbereich (30) des Spülbehälters (2) erstreckende Ausdehnung aufweist.

3. Geschirrspülmaschine nach einem der vorhergehenden Ansprüche, **dadurch gekennzeichnet, dass** der Luftkanal (27) spülbehälterseitig durch die Außenoberfläche (32) der Spülbehälterwandung (36) begrenzt ist.

4. Geschirrspülmaschine nach einem der vorhergehenden Ansprüche, **dadurch gekennzeichnet, dass** der Luftkanal (27) lufteingangsseitig in einen trichterförmig ausgebildeten Zuführungsstutzen (33) einmündet.

5. Geschirrspülmaschine nach einem der vorhergehenden Ansprüche, **dadurch gekennzeichnet, dass** der Wasservorratstank (17) in Entsprechung der Ausgestaltung des Spülbehälters (2) in Höhenrichtung (28) und/oder Tiefenrichtung (29) des Spülbehälters (2) bombiert ausgebildet ist.

6. Geschirrspülmaschine nach einem der vorhergehenden Ansprüche, **dadurch gekennzeichnet, dass** der Kontaktbereich (34) zwischen Spülbehälter (2) und Wasservorratstank (17) zumindest abschnittsweise mit einem Dichtmittel ausgerüstet ist.

7. Geschirrspülmaschine nach einem der vorhergehenden Ansprüche, **dadurch gekennzeichnet, dass** der Wasservorratstank als Frischwasserbehälter (17) ausgebildet ist.

## Claims

1. Dishwasher, in particular a household dishwasher, comprising a washing container (2) that provides a washing chamber (3) and is used to receive washware to be cleaned, and comprising a water storage tank (17) arranged next to the washing container (2), and comprising a corrugated pipeline that is guided through the water storage tank (17) at least in portions and is fluidically connected to the washing container (2),
**characterised in that**
the water storage tank (17) is arranged on the washing container (2), with an air duct (27) being arranged therebetween that extends in the height direction (30) of the washing container (2) and is connected on the inlet side to an air outlet duct (35) of a fresh air blower,
the air duct (27) being delimited on the water storage tank side by a deep groove (31) provided by the water storage tank (17).

2. Dishwasher according to claim 1, **characterised in that** the air duct (27) comprises, in the depth direction (29) of the washing container (2), an extension extending over a portion (30) of the washing container (2).

3. Dishwasher according to either of the preceding claims, **characterised in that** the air duct (27) is delimited on the washing container side by the outer surface (32) of the washing container wall (36).

4. Dishwasher according to any of the preceding claims, **characterised in that** the air duct (27) joins a funnel-shaped supply connection piece (33) on the air inlet side.

5. Dishwasher according to any of the preceding claims, **characterised in that** the water storage tank (17) is cambered in the height direction (28) and/or in the depth direction (29) of the washing container (2) in accordance with the design of the washing container (2).

6. Dishwasher according to any of the preceding claims, **characterised in that** the contact region (34) between the washing container (2) and the water storage tank (17) is equipped with a sealing means at least in portions.

7. Dishwasher according to any of the preceding claims, **characterised in that** the water storage tank is a fresh water container (17).

## Revendications

1. Lave-vaisselle, en particulier lave-vaisselle domestique, avec une cuve de lavage (2) qui fournit un espace de lavage (3) et qui sert à la réception d'objets à nettoyer, avec un réservoir d'eau (17) disposé près de la cuve de lavage (2) ainsi qu'avec une conduite tubulaire annelée qui traverse au moins par tronçons le réservoir d'eau (17) et qui est raccordée fluidiquement à la cuve de lavage (2),
**caractérisé en ce que**
le réservoir d'eau (17) est disposé sur la cuve de lavage (2) avec interposition d'une canalisation d'air (27) qui s'étend dans la direction de hauteur (30) de la cuve de lavage (2) et qui est raccordée côté entrée à une canalisation de sortie d'air (35) d'un ventilateur d'air frais,
dans lequel la canalisation d'air (27) est, côté réservoir d'eau, délimitée par une rainure en profondeur (31) fournie par le réservoir d'eau (17).

2. Lave-vaisselle selon la revendication 1, **caractérisé en ce que** la canalisation d'air (27) présente, dans la direction de profondeur (29) de la cuve de lavage (2), une extension s'étendant sur une zone partielle (30) de la cuve de lavage (2).

3. Lave-vaisselle selon l'une des revendications précédentes, **caractérisé en ce que** la canalisation d'air (27) est, côté cuve de lavage, délimitée par la surface extérieure (32) de la paroi de cuve de lavage (36).

4. Lave-vaisselle selon l'une des revendications précédentes, **caractérisé en ce que** la canalisation d'air (27) débouche, côté entrée d'air, dans une tubulure d'amenée (33) constituée en forme d'entonnoir.

5. Lave-vaisselle selon l'une des revendications précédentes, **caractérisé en ce que** le réservoir d'eau (17) est constitué de façon bombée d'une manière correspondant à la forme de la cuve de lavage (2) dans la direction de hauteur (28) et/ou dans la direction de profondeur (29) de la cuve de lavage (2).

6. Lave-vaisselle selon l'une des revendications précédentes, **caractérisé en ce que** la zone de contact (34) entre la cuve de lavage (2) et le réservoir d'eau (17) est équipée au moins par tronçons d'un moyen d'étanchéité.

7. Lave-vaisselle selon l'une des revendications précédentes, **caractérisé en ce que** le réservoir d'eau est constitué en tant que cuve d'eau propre (17).
